# EUROPEAN PATENT APPLICATION

(11) **EP 1 909 473 A1**
(43) Date of publication of application: **09.04.2008**
(21) Application number: 06121625.5
(22) Date of filing: 02.10.2006
(51) Int. Cl.: H04N 1/00, G06F 3/00

(54) **Digital photo frame**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

The photo frame (11, 13, 15) of the invention comprises a display and electronic circuitry, wherein the electronic circuitry is operative to display at least a part of a photograph on the display, detect a further photo frame within a certain distance of the photo frame and/or a movement of the photo frame, select a part of the photograph in dependence on the detected movement and/or a position of the detected further photo frame, and display the selected part of the photograph on the display. The computer program product of the invention enables a programmable device to function as the photo frame of the invention.

## Description

### FIELD OF THE INVENTION

The invention relates to a photo frame comprising a display and electronic circuitry.

The invention further relates to a computer program product enabling a programmable device to function as a photo frame.

### BACKGROUND OF THE INVENTION

Such a photo frame is being sold by Philips under type numbers 7FF1WD/00, 7FF1M4/00, 7FFICWO/00 and 7FF1AW/00, for example. These photo frames only allow the complete pictures to be displayed, either in a slide show or as thumbnails.

### SUMMARY OF THE INVENTION

It is an object of the invention to provide a photo frame which allows a user to select a part of a photograph in a quick manner.

According to the invention, the object is realized in that the electronic circuitry is operative to display at least a part of a photograph on the display, detect a further photo frame within a certain distance of the photo frame and/or a movement of the photo frame, select a part of the photograph in dependence on the detected movement and/or a position of the detected further photo frame, and display the selected part of the photograph on the display. Instead of using a traditional interface like touch-screen icons or physical buttons, movement or placement of the photo frame is used to select a part of the photograph. This physical interaction requires relative little interaction and relatively simple interaction steps and therefore allows a relatively quick selection.

In an embodiment of the photo frame of the invention, the electronic circuitry is operative to set the selected part of the photograph as new photo framing upon user request. By pressing a button, for example, the selected part can be set as the new photo framing, i.e. the electronic circuitry stores which part of the photograph has been selected for subsequent viewings and/or movement of the photo frame no longer changes the selected part.

The electronic circuitry may be operative to zoom in when a movement of the photo frame in a first direction is detected and operative to zoom out when a movement of the photo frame in a second direction is detected.

The first direction may be forwards with respect to a display side of the photo frame and the second direction may be backwards with respect to the display side of the photo frame. This provides an intuitive way of zooming. When a user pulls the photo frame towards him, he not only sees the photograph better, because it is closer to him, but also because the photo frame zooms into the photograph. The user may be able to select a position on the photo frame which will be used a center for the zooming action.

The electronic circuitry may operative to pan left when a movement of the photo frame in a first direction is detected and operative to pan right when a movement of the photo frame in a second direction is detected. This is useful when the aspect ratio of the photograph does not match the aspect ratio of the photo frame display or when used together with the zooming action. The panning need not be limited to left and right, but can also be up and down or combinations of left and right and up and down.

The first direction may be left with respect to a display side of the photo frame and the second direction may be right with respect to the display side of the photo frame.

The electronic circuitry may select a right part of the photograph when the electronic circuitry detects that the further photo frame is located to the left of the photo frame and a left part of the photograph when the electronic circuitry detects that the further photo frame is located to the right of the photo frame. The photo frame can detect the presence of further photo frame in its vicinity, e.g. using RFID tags, and use multiple photo frames to display a single photograph. The most common placement of multiple photo frames is next to each other. The photo may be exchanged between the photo frames using a wireless connection like Bluetooth, for example.

The electronic circuitry may select a top part of the photograph when the electronic circuitry detects that the further photo frame is located below the photo frame and a bottom part of the photograph when the electronic circuitry detects that the further photo frame is located above the photo frame.

### BRIEF DESCRIPTION OF THE DRAWINGS

These and other aspects of the invention are apparent from and will be further elucidated, by way of example, with reference to the drawings, in which:
Fig.1 is a flow chart of the method of the invention;
Fig.2 is an example of the zooming function of the photo frame of the invention;
Fig.3 is an example of the panning function of the photo frame of the invention;
Fig.4 is an example of a single picture being shown on two photo frames tiled horizontally;
Fig.5 is an example of a single picture being shown on two photo frames tiled vertically; and
Fig.6 is a block diagram of the photo frame of the invention.

Corresponding elements in the drawings are denoted by the same reference numeral.

### DETAILED DESCRIPTION OF THE DRAWINGS

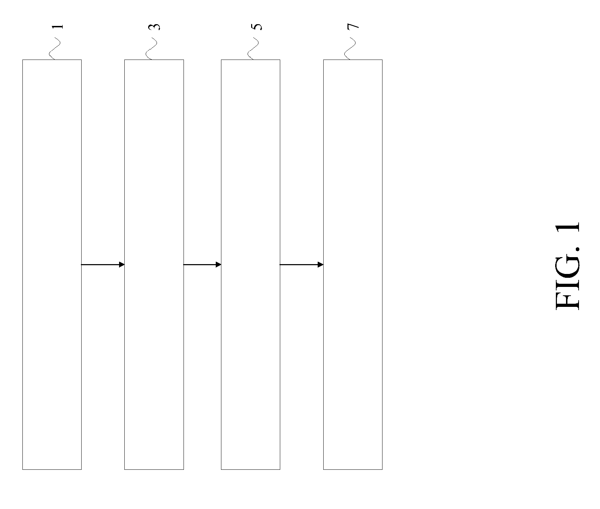

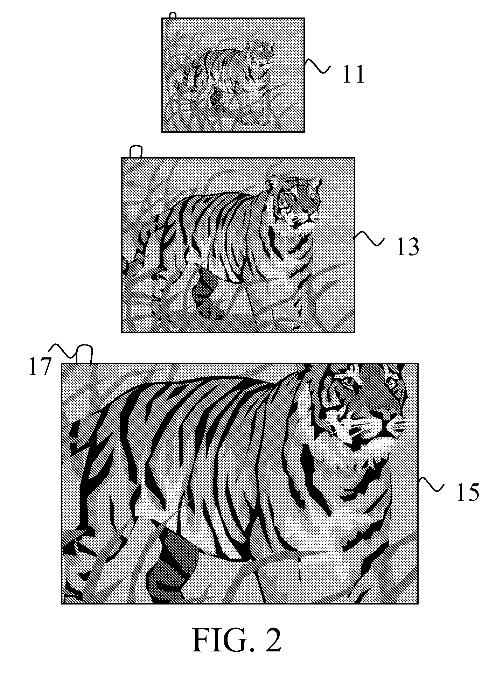

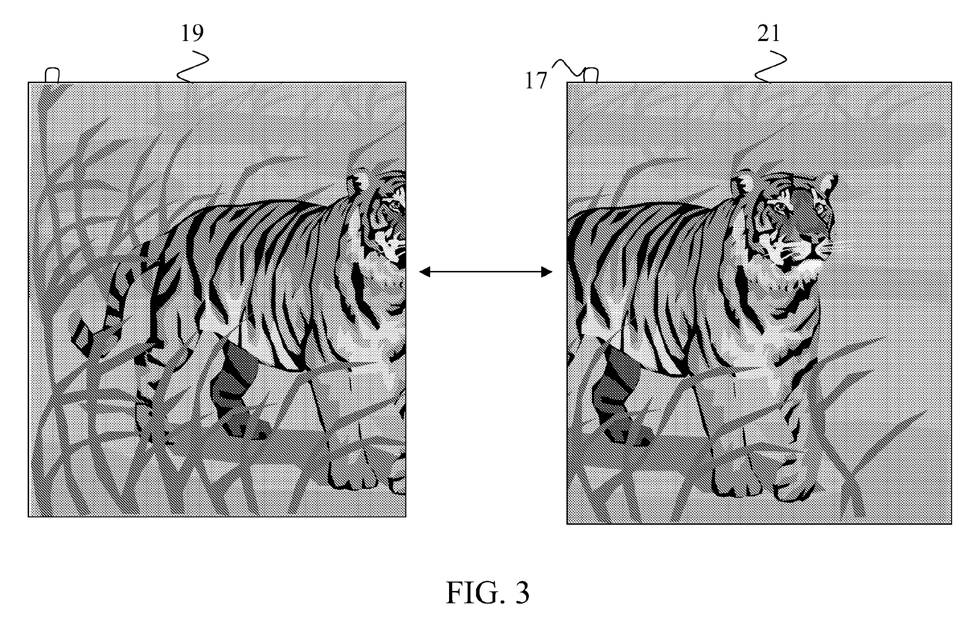

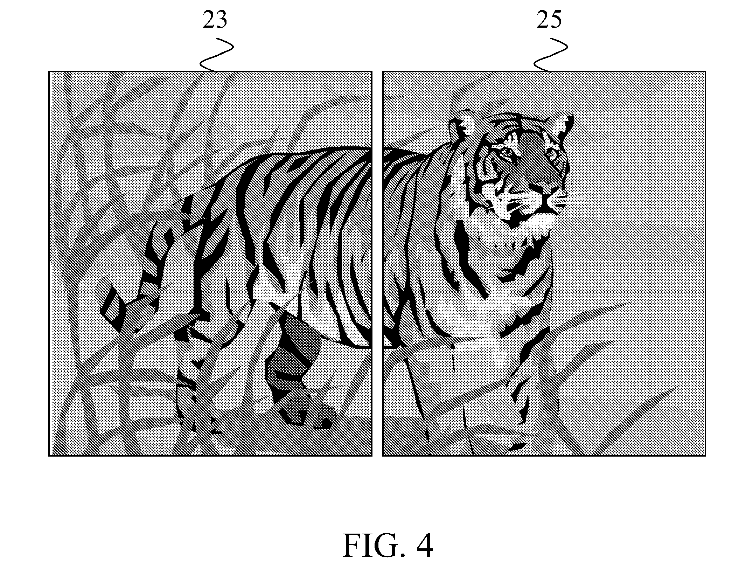

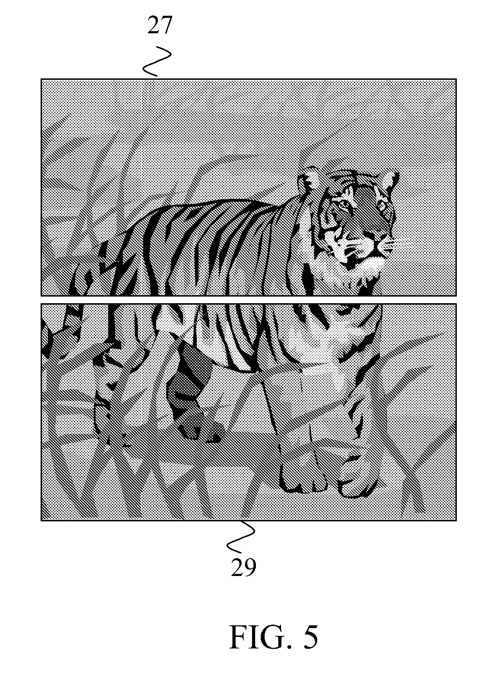

The method of the invention comprises four steps, see Fig.1 . A step 1 comprises displaying at least a part of a photograph on a display. A step 3 comprises detecting a further photo frame within a certain distance of the photo frame and/or a movement of the photo frame. A step 5 comprises selecting a part of the photograph in dependence on the detected movement and/or a position of the detected further photo frame. A step 7 comprises displaying the selected part of the photograph on the display.
The method enables the following features:
• Zooming: The user can hold the photo frame in his hands and after selecting a zoom spot he can zoom in/out by moving the frame back and forth. When tapping the screen again the zoom action is completed. Photo frame 11 of Fig.2 shows a photograph at a relatively long distance to the user: the photograph is shown in its entirety. Photo frame 13 of Fig.2 shows a photograph at a relatively average distance to the user: the photograph is slightly zoomed in. Photo frame 15 of Fig.2 shows a photograph at a relatively short distance to the user: the photograph is zoomed in further. An alternative to tapping the screen again could be pressing button 17 of Fig.2.
• Panning: By moving the frame up/down and left/right the image can be panned. Fig. 3 shows a photo frame 19 in which a photograph is completely panned left and a photo frame 21 in which the photograph is completely panned right. When button 17 is pressed on the frame, the image is locked.
• Free Zoom: The action of zooming and panning can also be combined in one gesture. First a button on the photo frame is pressed, e.g. button 17, and when the frame is moved in 3D space, the photo is zoomed/panned. The new framing is complete when the button is pressed again.
• Tiling: Two or more photo frame can be put next to each other to behave as one display. They both recognize each other and the image on one photo frame is displayed now as a panorama photo on the connected photo frames. Alternatively, two or more photo frames could be put on top of each other. Fig. 4 shows two different photo frames 23 and 25 placed next to each other. Fig. 5 shows to different photo frames 27 and 29 placed on top of each other.

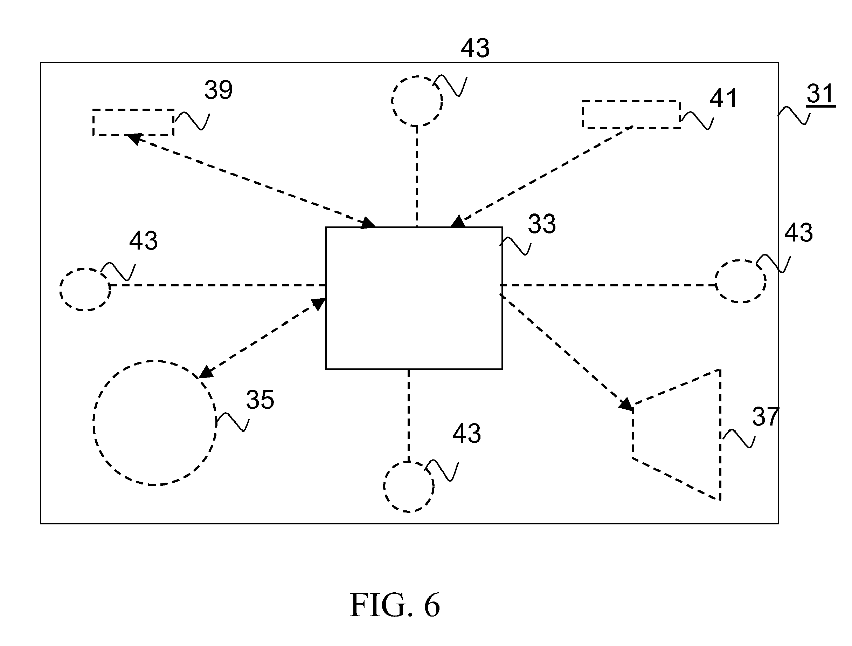

The photo frame 31 comprises a display (not shown) and electronic circuitry 33, see Fig. 6. The electronic circuitry 33 is operative to display at least a part of a photograph on the display, detect a further photo frame within a certain distance of the photo frame and/or a movement of the photo frame, select a part of the photograph in dependence on the detected movement and/or a position of the detected further photo frame, and display the selected part of the photograph on the display. The electronic circuitry 33 may comprise a general-purpose or application-specific processor. The photo frame 31 may comprise storage means 35, e.g. a hard disk or a solid state memory, like a Flash memory. The storage means 35 may comprise one or more photos and/or the framings of one or more photos. The photo frame 31 may comprise reproduction means 37, e.g. a speaker. The electronic circuitry 33 may use the reproduction means 37 to play an audio fragment associated with a photograph.

The photo frame may comprise a communication module 39, e.g. a wireless transceiver like a Bluetooth transceiver. The communication module 39 may be used, for example, to exchange photos with a PC. The photo frame 31 may comprise movement detection means 41, e.g. an accelerometer. The movement detection means 41 may be used to detect up, down, left, right, forwards and backwards movement, for example. The photo frame 31 may comprise means 43 for detecting further photo frames. For example, RFID detectors could be placed on the left, right, top and bottom side of the photo frame 31 in order to detect a further photo frame left or right from the photo frame 31 or below or above the photo frame 31. The RFIDs of the photo frames can further be used to allow the photo frames to locate each other on a wireless network.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A photo frame (31), comprising a display and electronic circuitry (33), the electronic circuitry (33) being operative to:
display (1) at least a part of a photograph on the display;
detect (3) a further photo frame within a certain distance of the photo frame and/or a movement of the photo frame;
select (5) a part of the photograph in dependence on the detected movement and/or a position of the detected further photo frame; and
display (7) the selected part of the photograph on the display.

2. A photo frame as claimed in claim 1, wherein the electronic circuitry (33) is operative to set the selected part of the photograph as new photo framing upon user request.

3. A photo frame as claimed in claim 1, wherein the electronic circuitry (33) is operative to zoom in when a movement of the photo frame in a first direction is detected and operative to zoom out when a movement of the photo frame in a second direction is detected.

4. A photo frame as claimed in claim 3, wherein the first direction is forwards with respect to a display side of the photo frame and the second direction is backwards with respect to the display side of the photo frame.

5. A photo frame as claimed 1, wherein the electronic circuitry (33) is operative to pan left when a movement of the photo frame in a first direction is detected and operative to pan right when a movement of the photo frame in a second direction is detected.

6. A photo frame as claimed in claim 5, wherein the first direction is left with respect to a display side of the photo frame and the second direction is right with respect to the display side of the photo frame.

7. A photo frame as claimed in claim 1, wherein the electronic circuitry (33) selects a right part of the photograph when the electronic circuitry (33) detects that the further photo frame is located to the left of the photo frame and a left part of the photograph when the electronic circuitry (33) detects that the further photo frame is located to the right of the photo frame.

8. A photo frame as claimed in claim 1, wherein the electronic circuitry (33) selects a top part of the photograph when the electronic circuitry detects (33) that the further photo frame is located below the photo frame and a bottom part of the photograph when the electronic circuitry (33) detects that the further photo frame is located above the photo frame.

9. A computer program product enabling a programmable device to function as the photo frame (31) of claim 1.
